# EUROPEAN PATENT APPLICATION

(11) **EP 1 672 910 A1**
(43) Date of publication of application: **21.06.2006**
(21) Application number: 05027794.6
(22) Date of filing: 19.12.2005
(51) Int. Cl.: H04N 5/073

(54) **Frame synchronizer, optical disk device, information recording/reproducing apparatus, and signal synchronizing method**

(30) Priority: 20.12.2004 JP 2004367739
(71) Applicant: NEC Electronics Corporation, Kawasaki, Kanagawa 211-8668 (JP)
(72) Inventor: Matsushima, Ko, Nakahara-ku Kawasaki Kanagawa 211-8668 (JP)
(74) Representative: Glawe, Delfs, Moll

(57) **Abstract**

To provide a frame synchronizer free of any loss of additional information added to frame data of an input video signal. An embodiment of the invention relates to a frame synchronizer for receiving a video signal having a first synchronization signal and frame data on a frame basis, writing the frame data to a memory on the frame basis in accordance with the first synchronization signal, and reading the frame data from the memory on the frame basis in accordance with a second synchronization signal of a frequency different from a frequency of the first synchronization signal to output the frame data, including: a synchronization signal generator generating the second synchronization signal having the frequency higher than a preset standard frequency. With such a configuration, it is possible to prevent the loss of the additional information added to the frame data in the input video data.

## Description

### BACKGROUND OF THE INVENTION

### 1. Field of the Invention

The present invention relates to a frame synchronizer, an optical disk device, an information recording/reproducing apparatus, and a signal synchronizing method, and more specifically to a frame synchronizer, an optical disk device, an information recording/reproducing apparatus, and a signal synchronizing method, each of which is used for standardizing a frame period of a video signal multiplexed with additional information.

### 2. Description of Related Art

There has been a growing trend to multiplex a video signal used for displaying video information such as television or video images with various types of additional information as well as video information to be actually displayed. To be specific, signals during a so-called vertical blanking interval of the video signal can be multiplexed with subtitle information for displaying captions (subtitles) upon the image reproduction or multiplexed with an electronic program guide (EPC) for extracting program information.

A video signal processing apparatus for receiving such a video signal including video information and additional information to reproduce or record the information extracts the video information and additional information from the received video signal on a frame basis. In this case, it matters whether or not the additional information can be correctly extracted.

When the video signal processing apparatus extracts the additional information from the received video signal, a serious problem arises especially in such a case that a frame period of the received video signal is different from an intended frame period of the video signal processing apparatus. This is supposedly because the received video signal involves a jitter.

To that end, a video signal processing apparatus having a function of adjusting the frame period of the received video signal into a fixed period, such as a frame synchronizer, has been under study and proposed (see Japanese Unexamined Patent Publication No. 2003-46805, for example).

The video signal processing apparatus as disclosed in Japanese Unexamined Patent Publication No. 2003-46805 stops receiving video signals of one period until an internal processing of the video signal processing apparatus corresponding to one period is completed if a frame period of the received video signal is longer than a reference frame period for the internal processing of the video signal processing apparatus. Further, if the frame period of the receive video signal is shorter than the reference frame period for the internal processing of the video signal processing apparatus, the apparatus stops a video signal processing during a period in which the internal processing of the video signal processing apparatus corresponding to one period outpaces the input of the video signals of one period and instead, executes an internal processing of the next period.

With such a method, if the frame period of the received video signal is shorter than the reference frame period for the internal processing of the video signal processing apparatus, none of the received video signals undergo the video signal processing. Here, as regards video information displayed on a screen, only image information of one frame that is generally 1/24 sec. or 1/30 sec. is not displayed, which does not adversely affect a display quality albeit a little deteriorated image quality. However, as for the additional information, there is a possibility that loss of the additional information of one period largely influences the whole data, and it is desirable to execute the video signal processing on all the video signals.

As mentioned above, the conventional video signal processing apparatus has a problem in that all frame data of the input video signals cannot be processed.

### SUMMARY OF THE INVENTION

According to an aspect of the present invention, a frame synchronizer is provided. The frame receives a video signal having a first synchronization signal and frame data on a frame basis. The frame synchronizer includes a memory, a synchronization signal generator and a controller. The synchronization signal generator generates a second synchronization signal having a frequency different from the first synchronization signal and higher than a predetermined standard frequency. The controller writes the frame data to the memory on the frame basis in accordance with the first synchronization signal, and reads the frame data from the memory on the frame basis in accordance with the second synchronization signal to output the frame data.

With such a configuration, the system clock having a frequency higher than the standard clock is generated and the synchronization signal is generated based on the generated system clock, so even if frame repeating occurs during a frame data read processing, frame skipping hardly occurs. As a result, it is possible to prevent a loss of additional information in the frame data.

According to another aspect of the invention, a signal synchronizing method includes; receiving a video signal having a first synchronization signal and frame data on a frame basis, writing the frame data to a memory on the frame basis in accordance with the first synchronization signal, and reading the frame data from the memory in accordance with a second synchronization signal of a frequency different from a frequency of the first synchronization signal on the frame basis to output the read frame data. The second synchronization signal is generated to have the frequency higher than a preset standard frequency.

According to this method, the system clock having a frequency higher than the standard clock is generated and the synchronization signal is generated based on the generated system clock, so even if frame repeating occurs during a frame data read processing, frame skipping hardly occurs. As a result, it is possible to prevent a loss of additional information in the frame data.

### BRIEF DESCRIPTION OF THE DRAWINGS

The above and other objects, advantages and features of the present invention will be more apparent from the following description taken in conjunction with the accompanying drawings, in which:
Fig. 1 is a block diagram showing the configuration of a frame synchronizer according to an embodiment of the present invention;
Fig. 2 is a flowchart of a processing flow at the data write time of the frame synchronizer according to the embodiment of the present invention;
Fig. 3 is a flowchart of a processing flow at the data read time of the frame synchronizer according to the embodiment of the present invention;
Fig. 4 is a block diagram showing a configuration example of a synchronization signal generator according to the embodiment of the present invention;
Fig. 5 is a block diagram showing a configuration example of an oscillator according to the embodiment of the present invention;
Fig. 6 is a block diagram showing a configuration example of an oscillator according to the embodiment of the present invention;
Fig. 7 is a timing chart illustrative of data read/write timings according to the embodiment of the present invention;
Fig. 8 is a timing chart illustrative of data read/write timings according to the embodiment of the present invention;
Fig. 9 is a block diagram showing the configuration of an MPEG encoder of a DVD recording/reproducing apparatus according to an embodiment of the present invention; and
Fig. 10 is a flowchart of a processing flow of the DVD recording/reproducing apparatus according to the embodiment of the present invention.

### DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposes.

### First Embodiment

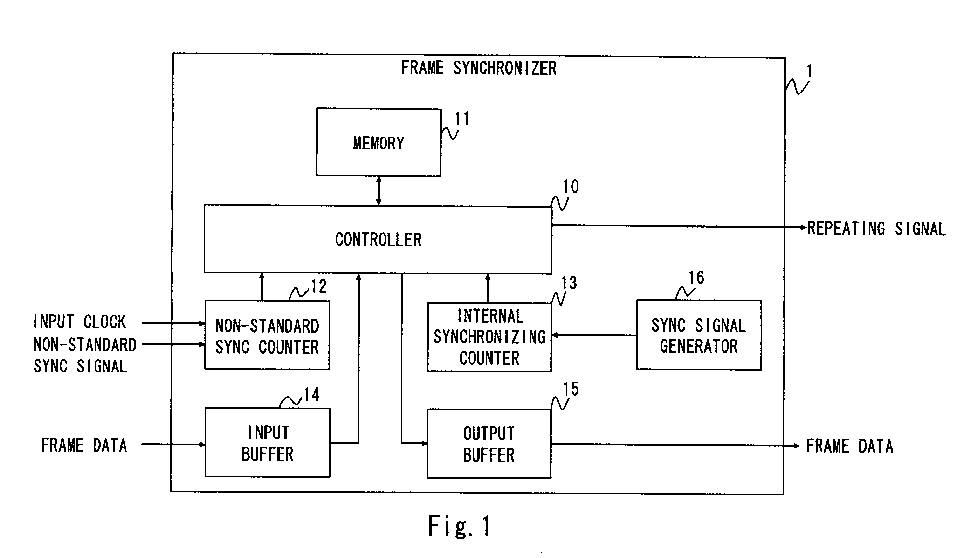

Fig. 1 is a block diagram showing the configuration of a frame synchronizer according to a first embodiment of the present invention. A frame synchronizer 1 includes a controller 10, a memory 11, a non-standard synchronous counter 12, an internal synchronous counter 13, an input buffer 14, an output buffer 15, and a synchronization signal generator 16.

The controller 10 is a control unit that executes various kinds of control in the frame synchronizer 1. More specifically, the controller controls input/output of frame data in a video signal to/from a memory. The frame data implies image data and additional data which compose each frame. The controller 10 may execute various kinds of control using a special processor or a central processing unit (CPU) may execute various kinds of control based on a program.

The memory 11 is a storage device for temporarily storing frame data sent from the input buffer 14 to output the frame data to the output buffer 15 in sync with an internal timing signal. The memory 11 includes a random access memory (RAM) or the like.

The non-standard synchronous counter 12 is used for counting the number of input non-standard synchronous signals. The term "non-standard" means that a period of the input video signal is out of spec of a standard period of the frame synchronizer 1. The frame synchronizer 1 receives and converts the video signal of the non-standard period into a signal of a standard period, and a non-standard synchronous signal is input in accordance with the non-standard period of the input video signal. The non-standard synchronous signal has a frame period aligned with the start or end of a frame of the frame data in the input video signal. The non-standard synchronous counter 12 receives the non-standard synchronous signal to count the number of frames based on the received non-standard synchronous signal. The non-standard synchronous counter 12 outputs a non-standard frame number in accordance with the count value of the frames to the controller 10.

The internal synchronous counter 13 receives an internal synchronization signal from the synchronization signal generator 16. Further, the internal synchronous counter 13 counts the number of frames in accordance with the received internal synchronization signal. The internal synchronous counter 13 outputs an internal frame number based on a count value of the frames to the controller 10.

The input buffer 14 is a memory for temporarily storing frame data. The input buffer 14 stores the input frame data for each frame, and this data is read from the controller 10 and written to the memory 11.

The output buffer 15 is a memory for temporarily storing output frame data. The output buffer 15 stores frame data for each frame, and this data is sent to a corresponding device in step with the internal synchronization signal.

The synchronization signal generator 16 generates an internal synchronization signal. How to generate the internal synchronization signal is described later in detail. The synchronization signal generator 16 supplies the generated internal synchronization signal to the internal synchronous counter 13.

It is desirable that the internal synchronization signal generated by the synchronization signal generator 16 have a period shorter than a period of the non-standard synchronous signal applied to the non-standard synchronous counter 12. The period of the internal synchronization signal is determined by a selecting unit 16. The selecting unit 16 may select an appropriate period in accordance with an input operation of a user or may automatically determine a period in accordance with the input video signal if possible.

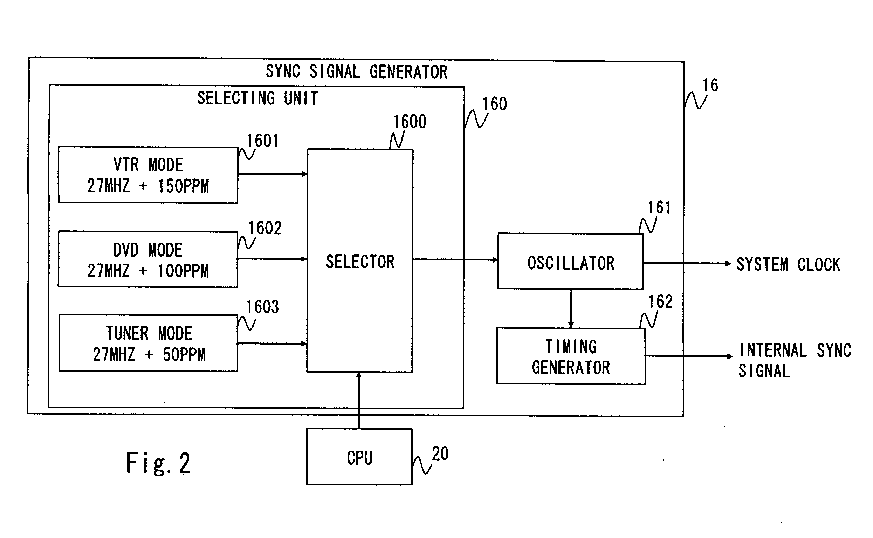

Fig. 2 is a block diagram showing a configuration example of the synchronization signal generator 16. The synchronization signal generator 16 includes a selecting unit 160, an oscillator 161, and a timing generator 162. The selecting unit 160 includes a selector 1600, and mode memories 1601, 1602, and 1603.

The selecting unit 160 functions to select a frequency of a system clock output from the oscillator 161. The selecting unit 160 may select an appropriate frequency in accordance with a user's operation or may automatically select a frequency. The selecting unit 160 sends information about the selected frequency to the oscillator 161.

The oscillator 161 is a system clock generator for generating a system clock based on the information about the frequency applied from the selecting unit 160. The oscillator 161 outputs the generated system clock to the timing generator 162.

The timing generator 162 generates an internal synchronization signal based on the system clock from the oscillator 161. The timing generator 162 outputs the generated internal synchronization signal to the internal synchronous counter 13.

The selector 1600 received an instruction from a CPU 20 to select one of the frequency information supplied from the mode memories 1601, 1602, and 1603 to output the selected frequency information to the oscillator 161.

The mode memories 1601, 1602, and 1603 store frequency information. In the illustrated example of Fig. 2, the mode storages 1601, 1602, and 1603 store VTR-mode frequency information, DVD-mode frequency information, and tuner-mode frequency information, respectively. These storages store the frequency information most suitable for the individual modes. Moreover, it is possible to set a mode in which the output frequency of the oscillator is always higher than the input clock frequency used for generating the non-standard synchronous signal. In this case, frequent repeat processes deteriorate the image quality, but the frame data can be obtained without fail. This mode is suitable for obtaining the additional information without fail at the sacrifice of video information. If the additional information is VBI information, this mode is called "VBI mode".

The CPU 20 may issue an instruction in accordance with a user's input operation with a remote controller, a keyboard, or a mouse or may automatically select an appropriate mode such as responding to the time or program specified by EPG information and setting "VBI mode" if the EPG information is input beforehand.

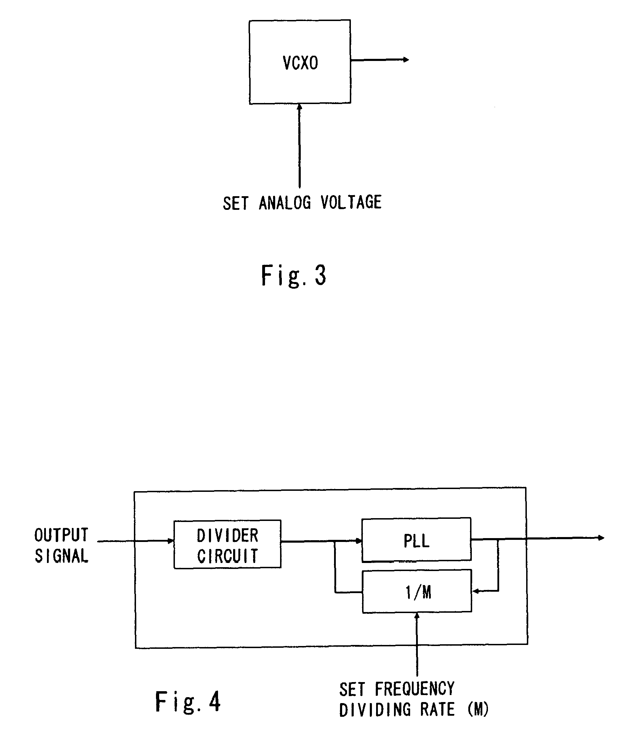

The oscillator 161 generates a system clock with a frequency selected with the selecting unit 160. There are two methods of controlling the output frequency of the oscillator 161, that is, a voltage control method of Fig. 3 and a phase locked loop (PLL) method of Fig. 4. According to the voltage control method, a VCXO (voltage controlled crystal oscillator) generates the system clock based on the preset analog voltage level. Meanwhile, according to the PLL method, a PLL circuit generates the system clock in accordance with a preset frequency dividing rate. The PLL circuit receives a signal for dividing an output signal frequency from an oscillating circuit into "n" from an output circuit. In this case, the resultant frequency is n/m of the output frequency of the oscillator. The oscillator 161 may be implemented in any form insofar as a system clock of a specified frequency can be supplied.

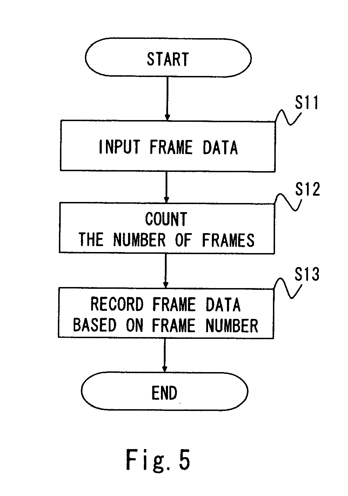

Referring next to a flowchart of Fig. 5, a processing flow of a data write processing of the frame synchronizer 1 according to the present invention.

First, the input buffer 14 receives and stores frame data in the video signal on a frame basis (S11). Subsequently, the non-standard synchronous counter 12 receives a non-standard synchronous signal in the video signal to count the number of frames in accordance with the received non-standard synchronous signal (S12). The non-standard synchronous counter 12 sends a frame number based on the count value of the frames to the controller 10.

Receiving the frame number from the non-standard synchronous counter 12, the controller 10 reads frame data corresponding to the frame number from input buffer 14 and records the read frame data in the memory 11 (S13). At this time, the controller 10 records the frame number and the frame data in association with each other.

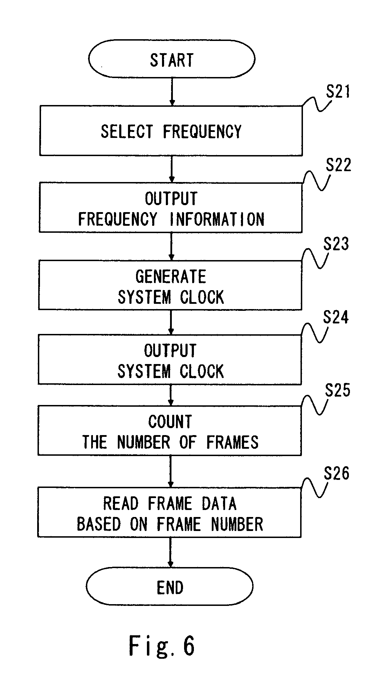

Fig. 6 is a flowchart of a data read processing of the frame synchronizer 1 according to the present invention. The data read processing starts in step with an input timing of the frame number from the internal synchronous counter 13. First, the selecting unit 160 selects a system clock frequency (S21). The selecting unit 160 output the selected frequency information to the oscillator 161 (S22).

The above system clock frequency is set higher than a standard clock frequency. The frequency of the synchronization signal generated based on the system clock is also set higher than the standard frequency. The standard clock and the standard frequency are determined based on the spec of the output data, for example. For example, in the case of converting the input video signal into MPEG (moving pictures experts group)-2 data, the frequency should be set to 27 Mhz. In this case, the system clock frequency is set to 27.00135 to 27.00405 Mhz, that is, preferably set about 50 to 150 ppm higher than the standard clock frequency.

The oscillator 161 generates a system clock based on the input frequency information (S23). The oscillator 161 generates the system clock and then outputs the generated system clock to the timing generator 162 (S24). The timing generator 162 generates the internal synchronization signal based on the input system clock. For example, in the case of processing an NTSC (National Television System Committee) video signal, one frame includes 525 lines, and one line corresponds to 858 clock pulses, so the internal synchronization signal is generated every 450450 clock pulses (= 525 x 858). The timing generator 162 sends the generated internal synchronization signal to the internal synchronous counter 13.

The internal synchronous counter 13 receives the internal synchronization signal from the timing generator 162 to count the number of frames based on the input internal synchronization signal (S25). The internal synchronous counter 13 outputs a frame number based on the count value of the frames to the controller 10.

The controller 10 receives the frame number from the internal synchronous counter 13 to read the frame data stored in association with the frame number from the memory 11 and send the read data to the output buffer 15 (S26). The read frame number is frame data corresponding to the frame number that has been written to the memory 11.

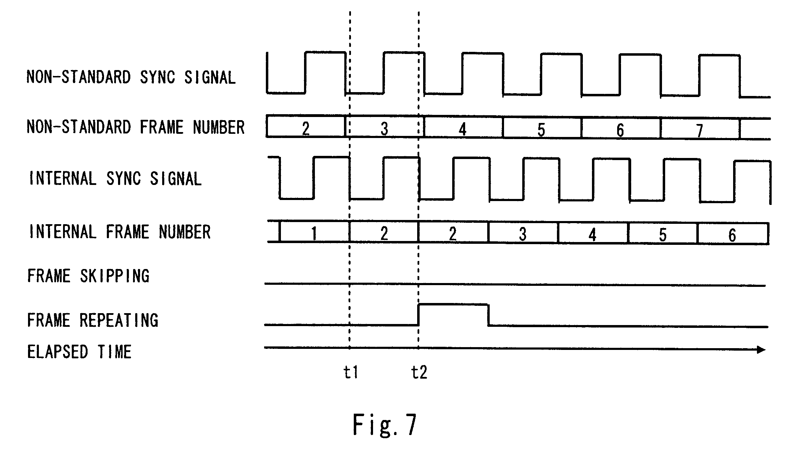

Referring next to Fig. 7, the data read/write timings are described.

A non-standard synchronous signal waveform of Fig. 7 is a waveform of the non-standard synchronous signal in the video signal, which is applied to the non-standard synchronous counter 12. A non-standard frame number of Fig. 7 shows the frame number obtained by the non-standard synchronous counter 12 counting the input non-standard synchronous signals and send to the controller 10 in accordance with the count value. An internal synchronization signal waveform of Fig. 7 is a waveform of the internal synchronization signal generated with the synchronization signal generator 16 and supplied to the internal synchronous counter 13. An internal frame number of Fig. 7 shows the frame number obtained by the internal synchronous counter 13 counting the number of frames and then sent to the controller 10.

The non-standard frame number increments in accordance with a falling edge of the non-standard synchronous signal. At this time, the controller 10 reads frame data corresponding to the incremented frame number from the input buffer 14 and writes the read data to the memory 11.

The internal frame number increments in accordance with the failing edge of the internal synchronization signal. At this time, the controller 10 reads frame data corresponding to the incremented frame number from the memory 11 and sends the read data to the output buffer 15. Here, the read frame data is frame data corresponding to the frame number that has been written to the memory 11 and thus, at a timing t1 of Fig. 7, the frame data corresponding to the internal frame number 2 has been written. Hence, the read processing is executed with no problems. However, at a timing t2, the frame data corresponding to the internal frame number 3 has not been yet written, so the frame data corresponding to the frame number 2 is read again. This is called "frame repeating".

When the frame repeating occurs, the same frame is reproduced for two consecutive frames upon the image reproduction, so an image quality is somewhat deteriorated, but the loss of frame data never occurs, which means that the multiplexed additional information can be obtained without fail. Further, it is possible to check whether or not the frame repeating occurs at this point, so a frame repeating signal may be generated to send information about the frame repeating to a corresponding device such as an MPEG encoder. Receiving the information about the frame repeating, the MPEG encoder sets a repeat flag ON for the repeated frame data during the MPEG encoding. Thus, it is possible to prevent the same frame from being recorded redundantly.

The frequency of the system clock generated by the oscillator 161 is set higher than the clock frequency of the input video signal as a reference of the non-standard synchronous signal applied to the non-standard synchronous counter 12, so there is a possibility that frame repeating occurs, but frame skipping that is a phenomenon opposite to the frame repeating hardly occurs.

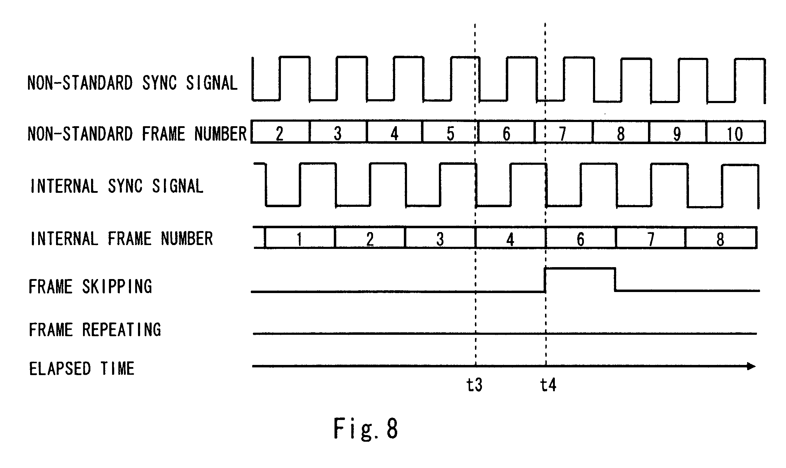

Fig. 8 shows an example where the frame skipping occurs. In this case, the frequency of the non-standard synchronous signal is hither than the frequency of the internal synchronization signal. At a timing t3 of Fig. 8, the frame data corresponding to the internal frame number 4 is read, but during this read processing, frame data corresponding to the non-standard frame numbers 5 and 6 has been written to the memory 11. As a result, at a timing t4, the frame data corresponding to the internal frame number 6 is read following the data corresponding to the internal frame number 4, so the data corresponding to the internal frame number 5 is skipped.

The frame skipping occurs under such conditions that the non-standard synchronous signal frequency is higher than the standard clock frequency by 150 ppm or more. However, such a situation that the non-standard synchronous signal frequency is higher than the standard clock frequency by 150 ppm or more does not occurs, that is, the frame skipping does not occur except in special cases such as fast-forwarding/rewinding. Further, during the fast-forwarding/rewinding, the additional information is insignificant. Thus, in such a case, the frame skipping is allowed. Further, the system clock frequency may be set so as not to cause the frame skipping even under such conditions.

In this way, the frame synchronizer according to the present invention sets the system clock frequency higher, making it possible to prevent frame skipping and obtain the multiplexed additional information without fail.

### Second Embodiment

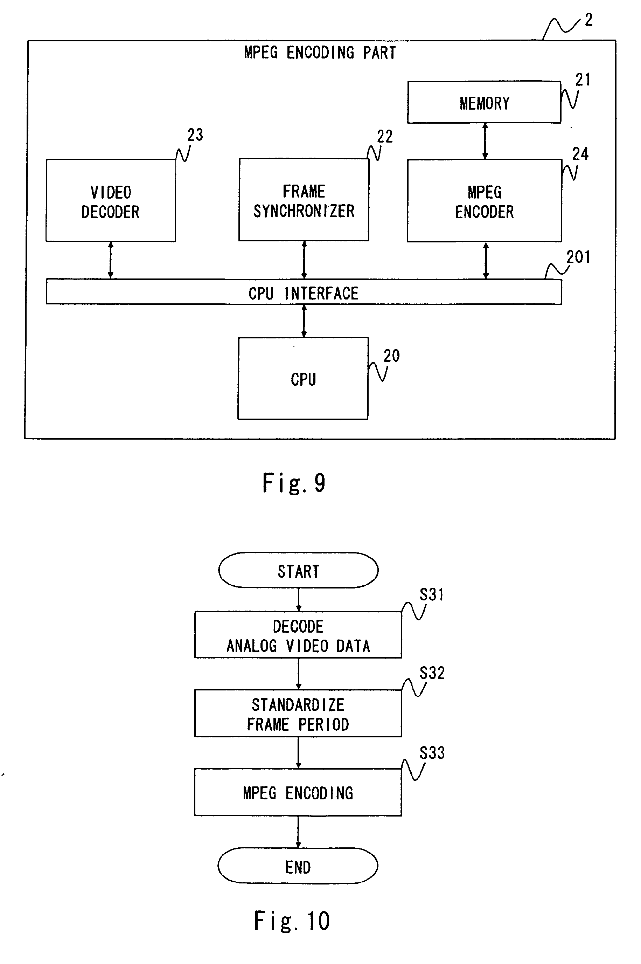

Hereinbelow, an example of applying the frame synchronizer according to the present invention to a DVD recording/reproducing apparatus is described. Fig. 9 is a block diagram showing the configuration of an MPEG encoder of a DVD recording/reproducing apparatus according to a second embodiment of the present invention.

An MPEG encoder 2 of the DVD recording/reproducing apparatus according to the present invention includes a CPU 20, a CPU interface 201, a memory 21, a frame synchronizer 22, a video decoder 23, and an MPEG encoder 24.

The CPU 20 is a controller for executing various kinds of control over the MPEG encoder 2 in the DVD recording/reproducing apparatus according to the present invention. The data exchange between the CPU 20, and the frame synchronizer 22, the video decoder 23, and the MPEG encoder 24 is performed through'the CPU interface 201.

The memory 21 is a storage device for storing a program or data for operating the MPEG encoder 2 of the DVD recording/reproducing apparatus. The memory 21 includes a RAM or the like.

The configuration of the frame synchronizer 22 is the same as the frame synchronizer 1 according to the first embodiment of the invention, so its description is omitted here. For that matter, the CPU 20 doubles as the controller in the frame synchronizer, and the memory 21 may double as the memory 11 in the frame synchronizer.

The video decoder 23 is a decoder for receiving an analog video signal and converting the signal into digital video data. The decoding may be executed by the CPU 20 using a program or by a special processor. The decoded digital video data is sent to the frame synchronizer 22.

The MPEG encoder 24 receives the video data standardized with the frame synchronizer 22 and converts the received data into MPEG data. The converted MPEG data is sent as an MPEG stream.

Referring next to a flowchart of Fig. 10, a processing flow of the MPEG encoder 2 in the DVD recording/reproducing apparatus according to the second embodiment of the invention is described.

First, the video decoder 23 receives and converts the analog video data to digital video data (S31). The video decoder 23 sends the converted digital video data to the frame synchronizer 22.

The frame synchronizer 22 receives the digital video data from the video decoder 23 and then standardizes a frame period of the received digital video data (S32). The way to standardize the data is the same as the first embodiment. The frame synchronizer 22 supplies the standardized video data to the MPEG encoder 24.

The MPEG encoder 24 receives and converts the standardized video data into MPEG data (S33). The converted MPEG data is output to a corresponding device as the MPEG stream and recorded on a recording medium such as a DVD-R.

In this way, the MPEG encoder 2 of the DVD recording/reproducing apparatus converts the received analog data into the MPEG data. Applying the frame synchronizer according to the present invention to this conversion makes it possible to prevent the loss of additional data. Further, the MPEG encoder 24 receives a frame repeating signal from the frame synchronizer 22, thereby setting a repeating flag ON for the frame data repeated during the MPEG encoding to prevent the redundant recording of the same frame. As a result, it is possible to minimize extra streams.

### Other Embodiments

In the above embodiments, the MPEG encoding processing is executed as a post-processing of the frame synchronizer, but this processing may be executed by a video encoder or executed in parallel with the frame synchronizer.

It is apparent that the present invention is not limited to the above embodiment and it may be modified and changed without departing from the scope and spirit of the invention.

## Claims

1. A frame synchronizer receiving a video signal having a first synchronization signal and frame data on a frame basis, the frame synchronizer comprising:
a memory;
a synchronization signal generator for generating a second synchronization signal having a frequency different from the first synchronization signal and higher than a predetermined standard frequency; and
a controller for writing the frame data to the memory on the frame basis in accordance with the first synchronization signal, and reading the frame data from the memory on the frame basis in accordance with the second synchronization signal to output the frame data.

2. The frame synchronizer according to claim 1, wherein the synchronization signal generator selects one frequency from among different frequencies in accordance with a type of the received video signal to generate the second synchronization signal of the selected frequency.

3. The frame synchronizer according to claim 1, wherein the synchronization signal generator selects one frequency from among different frequencies in accordance with a user' s input operation to generate the second synchronization signal of the selected frequency.

4. The frame synchronizer according to claim 1, wherein the synchronization signal generator generates the second synchronization signal having a frequency that is higher than the frequency of the first synchronization signal all the time.

5. The frame synchronizer according to claim 1, wherein the synchronization signal generator selects one frequency from among different frequencies in accordance with a user's input operation, and at least one of the different frequencies is higher than the frequency of the first synchronization signal all the time.

6. The frame synchronizer according to claim 1, wherein the synchronization signal generator comprises:
a system clock generator for generating a system clock having a frequency higher than the predetermined standard frequency; and
a timing generator for generating the second synchronization signal in accordance with the system clock generated by the system clock generator.

7. The frame synchronizer according to claim 6, wherein the system clock generator selects one frequency from among different frequencies in accordance with a type of the received video signal to generate a clock of the selected frequency.

8. The frame synchronizer according to claim 6, wherein the system clock generator selects one frequency from among different frequencies in accordance with a user' s input operation to generate a clock of the selected frequency.

9. The frame synchronizer according to claim 6, wherein the system clock generator generates a clock having a frequency that is higher than a clock frequency of an input clock used for generating the first synchronization signal all the time.

10. The frame synchronizer according to claim 6, wherein the system clock generator selects one frequency from among different frequencies in accordance with a user' s input operation to generate the second synchronization signal of the selected frequency, and at least one of the different frequencies is higher than the frequency of an input clock used for generating the first synchronization signal all the time.

11. An information recording/reproducing apparatus comprising:
the frame synchronizer according to claim 1;
a video decoder for converting an input analog video signal into a digital video signal and outputting the converted digital video signal to the frame synchronizer.

12. A signal synchronizing method, comprising:
receiving a video signal having a first synchronization signal and frame data on a frame basis;
writing the frame data to a memory on the frame basis in accordance with the first synchronization signal; and
reading the frame data from the memory in accordance with a second synchronization signal of a frequency different from a frequency of the first synchronization signal on the frame basis to output the read frame data, the second synchronization signal being generated to have the frequency higher than a preset standard frequency.

13. The signal synchronizing method according to claim 12, wherein one frequency is selected from among different frequencies in accordance with a type of the input video signal to generate the second synchronization signal of the selected frequency.

14. The signal synchronizing method according to claim 12, wherein one frequency is selected from among different frequencies in accordance with a user' s input operation to generate the second synchronization signal of the selected frequency.

15. The signal synchronizing method according to claim 12, wherein the second synchronization signal has a frequency that is higher than the frequency of the first synchronization signal all the time.

16. The signal synchronizing method according to claim 12, wherein a system clock having a frequency higher than the predetermined standard frequency is generated to generate the second synchronization signal based on the generated system clock.

17. The signal synchronizing method according to claim 16, wherein a frequency of the system clock is selected from among different frequencies in accordance with a user' s input operation.

18. The signal synchronizing method according to claim 16, wherein a frequency of the system clock is selected from among different frequencies in accordance with a type of the input video signal.

19. The signal synchronizing method according to claim 16, wherein the system clock has a frequency that is higher than a clock frequency of an input clock used for generating the first synchronization signal all the time.
